# EUROPEAN PATENT SPECIFICATION

(11) **EP 1 760 599 B1**
(45) Date of publication and mention of the grant of the patent: **14.05.2008**
(21) Application number: 05107475.5
(22) Date of filing: 15.08.2005
(51) Int. Cl.: G06F 13/38, G06F 9/445

(54) **Universal Peripheral Connector**
Universeller Peripherieverbinder
Connecteur périphérique universel

(43) Date of publication of application: 07.03.2007
(73) Proprietor: Research In Motion Limited, Waterloo, Ontario N2L 3W8 (CA)
(72) Inventor: Varanda, Marcelo, K2K 3K2, Ottawa, (CA); Vuong, Thanh Vinh, N2E 4B9, Kitchener, (CA); Estable, Luis Pablo, J9A 3J3, Hull (CA)
(74) Representative: Rickard, David John

(56) References cited:
- EP-A- 1 096 372
- WO-A-20/04029817
- US-A- 5 784 581
- PATENT ABSTRACTS OF JAPAN vol. 2003, no. 12, 5 December 2003 (2003-12-05) & JP 2005 103992 A (CASIO ELECTRONICS CO LTD; CASIO COMPUT CO LTD), 21 April 2005 (2005-04-21)
- PATENT ABSTRACTS OF JAPAN vol. 2002, no. 06, 4 June 2002 (2002-06-04) & JP 2002 055936 A (TOSHIBA CORP), 20 February 2002 (2002-02-20)

## Description

The present application relates generally to the field of wireless communication devices and, in particular, to a connector to connect the wireless communication device with a peripheral device.

Many mobile data devices, such as wireless data devices, personal digital assistants, smart phones and cellular telephones, include a universal serial bus (USB) interface. The USB is used for a variety of functions but is primarily designed to connect the mobile data device with a computer.

The connection of a mobile data device to a computer allows the mobile data device to be a client and the computer to be the USB server. However, in many cases, it would be also desirable to connect the data device to a USB peripheral. Such peripherals include, for example, input devices, printers, cameras, mass storage devices, projectors, as well as many other peripherals known to those skilled in the art.

The problem with connecting a mobile data device to a peripheral is that the mobile data device would have to become the USB server. In current mobile data devices, the device is configured to connect to a USB host and not to a USB peripheral device. There is therefore a need to enable connectivity between a mobile data device and a USB peripheral device utilizing an existing USB port on the mobile data device.

Attempts have been made to solve the above problem. New data devices may include a technology labelled as USB On-The-Go. The problem with USB On-The-Go is that it requires at least USB 2.0 in order to work. Many existing mobile data devices do not include this version of USB ports and therefore a solution is required that will work with all mobile data devices. WO2004/029817 discloses a bus connection system in which a bus station, in the form of a hardware "dongle" operates in conjunction with a USB device.

The present method and apparatus provide a USB peripheral connector to connect the mobile data device to a variety of peripherals. A universal peripheral connector apparatus is provided which includes at least one USB port, a controller to control the one USB port, a microprocessor configured to control the USB host controller, a USB driver for a mobile data device, wherein the USB driver is configured to operate within the operating system operating on the microcontroller and further is configured to enable the mobile data device to connect to one or more peripherals using the universal peripheral connector apparatus.

The universal peripheral connector apparatus can include a number of known standard interfaces to support peripherals. Besides USB this could include for example a VGA port to enable a mobile data device to display the user interface of the data device on the VGA screen or to connect to a peripheral such as an overhead projector for making presentations.

The universal peripheral connector can be a stand-alone device connecting to the mobile data device through a standard USB cable or could include a cradle to hold the mobile data device. The cradle could have a USB connector built in so that when a user inserts the mobile data device into the cradle, the cradle is connected to the mobile data device through the USB port. Peripherals can then be connected to the cradle using other ports on the cradle, such as a USB or a VGA port. The above is not meant to be limited to a cradle or on the stand-alone USB peripheral connector, and one skilled in the art would realize that other type supports could be used.

The universal peripheral connector could be used by connecting it to a mobile data device. The universal peripheral connector could then detect the presence of the USB peripheral at the USB port. Further, if a peripheral is detected, the universal peripheral connector can determine whether or not a driver exists for that peripheral. If a driver does not exist, then a driver can be obtained. Because the mobile data device communicates over the air, if the driver is not stored in either the universal peripheral connector or the mobile data device, then it can be obtained over the air from a driver repository that the mobile data device knows about. Once the driver is obtained and loaded, it can be used to drive the peripheral device.

### GENERAL

The present application therefore preferably provides a universal connector apparatus for a mobile device and in communication with the mobile device, the apparatus comprising: at least one universal serial bus (USB) connector providing at least one connection; at least one USB host controller configured to control the at least one USB connection; a microprocessor configured to control said at least one USB host controller, the microprocessor having an operating system; a USB device control interface on said mobile device configured to communicate and control said universal connector apparatus; and a USB driver configured to operate within said operating system to enable said mobile device to connect to one or more peripherals via said at least one USB connection, internal memory adapted to store one or more USB peripheral drivers for connecting a mobile device to said one or more peripherals, wherein said peripheral drivers are loaded onto said connector apparatus from a remote repository via a mobile device connected to the apparatus.

The present application further provides a method of connecting and facilitating control of a universal serial bus (USB) peripheral from a mobile device using a universal connector apparatus, the method comprising the steps of: detecting at the connector apparatus the connection or presence of a USB peripheral; if the peripheral is the mobile device configuring the mobile device for remote control of the universal connector; and if the peripheral device is not the mobile device, configuring the mobile device if connected for remote control of the universal connector; locating a driver for said peripheral, said locating step including requesting the driver from the mobile device, wherein the mobile device requests the driver from a drivers' repository over an air interface if the driver is not stored on the mobile device, and driving said peripheral using said driver to provide a functional feature at the mobile device.

### BRIEF DESCRIPTION OF THE DRAWINGS

The present apparatus and method will be better understood with reference to the drawings in which:
FIGURE 1 is a block diagram of an exemplary universal peripheral connector connected to a mobile data device and to various peripherals;
FIGURE 2 is a flow chart of a method of connecting a universal peripheral connector to a peripheral device and to a mobile data device;
FIGURE 3 is a block diagram of an exemplary mobile data device that can be used with the present apparatus and method;
FIGURE 4A is an exemplary USB sled that a mobile data device can be placed into;
FIGURE 4B is a rear view of the USB sled of FIGURE 4A;
FIGURE 4C is an alternative embodiment using a USB dongle or USB peripheral device to connect the handheld device to the peripheral;
FIGURE 5 is a high level diagram showing the USB housing connected to the mobile data device and the peripheral device; and
FIGURE 6 is a block diagram of a further embodiment of a universal peripheral device.

### DESCRIPTION OF PREFERRED EMBODIMENTS

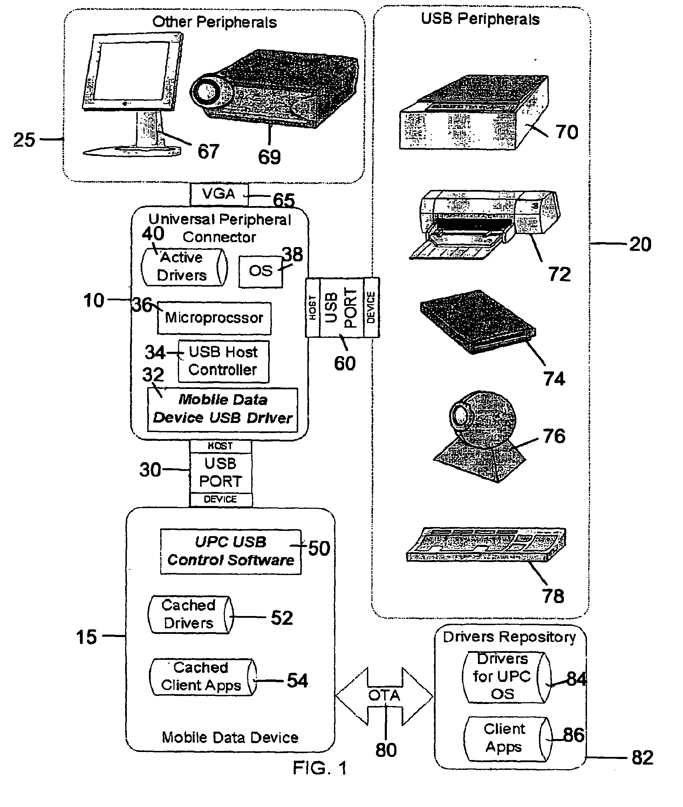

Reference is now made to the drawings. Figure 1 shows a universal peripheral connector 10 for connecting a mobile data device 15 with a USB peripheral 20 or another peripheral 25. Since many mobile devices 15 do not include a USB port that can be a host USB port, universal peripheral connector 10 is required in order to connect the mobile data device 15 to a peripheral 20. Universal peripheral connector 10 is connected to mobile data device through a USB connection 30. As will be appreciated by those skilled in the art, USB connection 30 can either be a USB cable, a connector connecting directly to mobile data device 15, or other known connection.

Universal peripheral connector 10 includes a mobile data device USB driver 32 for use in driving USB connection 30 to communicate with mobile data device 15.

Universal peripheral connector 10 further includes a USB host controller 34 in order to control the USB port or USB ports on the universal peripheral connector. Since the universal peripheral connector can connect to USB peripherals or other peripherals, at least one USB port is included on universal peripheral controller, but multiple ports could exist.

A microprocessor 36 on universal peripheral connector 10 is configured to control the USB host controller and an operating system 38 is adapted to execute on the microprocessor.

Universal peripheral connector 10 may further include a number of active drivers 40 which are the commonly used drivers to drive USB and other peripherals.

Mobile data device 15, an exemplary version of which is described in more detail below, includes a UPC USB control software module 50 that is used to control the universal peripheral connector. Thus, even though the mobile data device is the client device for the universal peripheral connector's host USB port, control of the universal peripheral connector lies within the mobile data device.

Mobile data device 15 further includes cached drivers 52 which are stored to provide universal peripheral connector 10 with drivers necessary to drive various USB and other peripherals. Cached drivers 52 could be uploaded into universal peripheral connector if universal peripheral connector 10 does not include the driver in its active drivers module 40.

As is described in more detail below, mobile data device 15 further includes cached client applications 54 which are used to exchange data with the USB and other peripherals.

Universal peripheral connector 10 preferably includes a USB connector 60 to connect with a USB peripheral 20. Multiple connectors 60 could exist for universal peripheral connector 10.

As illustrated in Figure 1, a VGA port 65 is also optionally a part of universal peripheral connector 10. VGA port 65 is used to connect to peripherals such as a monitor 67 or a projector 69.

Other ports could also exist on universal peripheral connector 10 to accommodate peripherals that do not use either USB or VGA ports.

Examples of universal serial bus peripherals 20 could include storage devices 70, printers 72, external drives 74, cameras 76, or keyboards 78. Other devices are contemplated to also be within the scope of the present application, and the application is not limited by the specific type of peripheral used.

In operation, a universal peripheral connector 10 is connected to a mobile data device 15 through USB port 30. Mobile data device driver 32 is used to establish communication with mobile data device 15 and UPC USB controls software communicates with microprocessor 34 to control a USB host controller 36 to a control USB host controller 34. If a peripheral is connected to USB port 60, USB host controller 34 attempts to determine the appropriate driver for the peripheral. It looks in active driver module 40 to determine whether the active driver is located on the universal peripheral connector. If the relevant driver is not located within the active driver module, universal peripheral connector 10 asks mobile data device 15 for the appropriate driver.

Mobile data device 15 then looks in its cached driver storage 52 to determine whether the appropriate driver exists on the mobile data device. If the cached driver storage 52 does not contain the appropriate driver, mobile data device 15 uses an air interface to obtain the appropriate device driver. The air interface 80 can thus be used to obtain a driver from driver repository 82 which stores drivers for the UPC operating system in its storage 84. It can also be used to obtain client applications 86.

The appropriate driver is then sent over the air back to mobile data device 15 which then can send the driver to USB host controller 34. Microprocessor 36 could optionally tell the universal peripheral connector to store the driver in its active driver storage.

Once the device is connected to the universal peripheral connector and to a peripheral, the client application 54 can be used to communicate with the peripheral device. For example, if the mobile data device is being used for email and the user connects the mobile data device to a printer to print out the email, the mail application can include a print option. The print option could send the data to the printer through USB port 30 and USB port 60. One skilled in the art will realize that various options exist for sending data to a peripheral device and these would be known to those skilled in the art.

In the above printing example, the mobile data device could for example use TCP/IP for printing. The email program could include a local loopback interface in which the application printed to a port with the address 127.0.0.n where n is a number between 0 and 255. The print driver could look to this port and send the data on this port through the USB connection. Other options could include, for example, FTP.

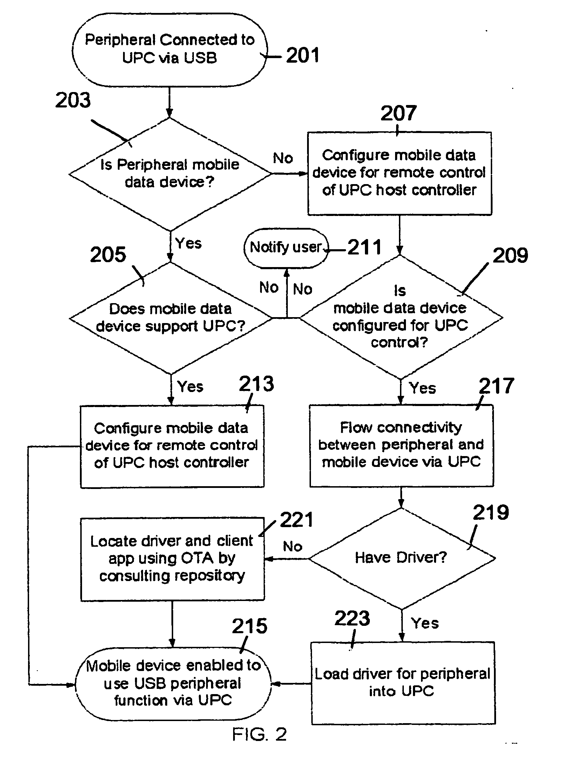

Reference is now made to Figure 2. Figure 2 shows a flow chart of the way that the universal peripheral connector connects to both the mobile data device and to a peripheral device. If a peripheral is connected to the UPC via USB in step 201, the UPC first checks to see whether the peripheral is a mobile data device in step 203. If yes, the peripheral next checks in step 205 whether the mobile data device supports the universal peripheral connector. If the peripheral device is not a mobile device as determined in step 203, the UPC next proceeds to step 207 in which it attempts to configure a mobile data device also connected to the UPC for remote control of the UPC host controller.

From 207, the UPC proceeds to step 209 in which it checks whether the mobile data device is configured for UPC control.

If in step 205 the device does not support the UPC or if in step 209 the mobile data device is not configured for UPC control, the UPC proceeds to step 211 in which a user notification is generated and the process ends.

If in step 205 the mobile data device does support the UPC, the UPC next proceeds to step 213 in which it attempts to configure the mobile data device for remote control of the UPC host controller, similar to step 207.

The UPC then proceeds from step 213 to step 215 in which a state is entered in which the mobile data device is now enabled to use a USB peripheral through the UPC.

From step 209, if the mobile data device is configured for UPC control, the UPC next proceeds to step 217 in which flow connectivity is established between the peripheral and the mobile device through the UPC.

The UPC next proceeds to step 219 in which it checks whether it or the mobile device has the driver for the peripheral that has just been attached. If it does not have the driver, then the driver is located in step 221 by obtaining it over the air and consulting the repository 84 as illustrated in Figure 1.

From step 221, the UPC proceeds to step 215 in which the mobile data device is enabled to use the peripheral via the UPC.

If in step 219 the UPC discovers that it does have the driver, then the driver is loaded for the peripheral in step 223 and the UPC moves to step 215.

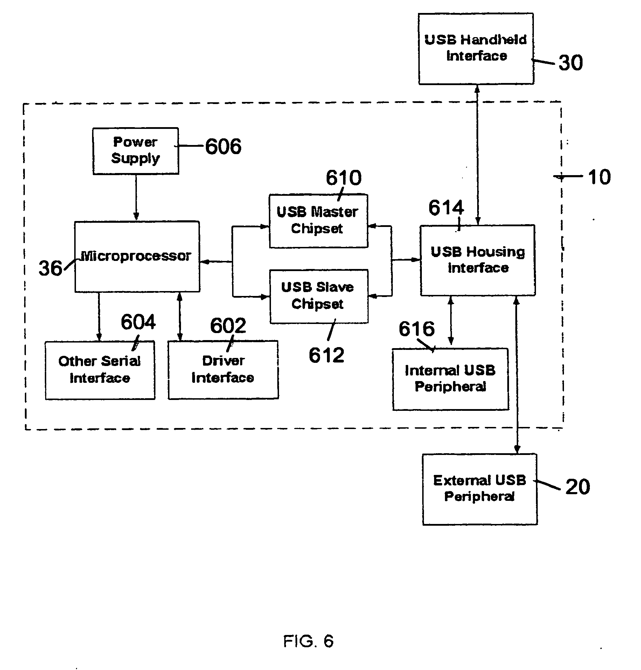

Reference is now made to Figure 6. Figure 6 shows an alternative embodiment of a universal peripheral connector 10 which communicates through USB port 30 with a mobile data device 15 and through a USB port 60 to a peripheral device.

In the alternative embodiment of Figure 6, a microprocessor 36 communicates with a driver interface 602 which may or may not be the same as active driver module 40.

Microprocessor 36 further communicates with other serial interfaces 604 which could include the VGA interface or other interfaces know to those skilled in the art. A power supply 606 supplies power to UPC 10.

Microprocessor 36 further communicates with a USB master chip set 610 and USB slave chip set 612. In this way, UPC 10 can either be the master or slave for each of the USB drives. Master and slave are also referred to as host end device in this specification.

Master chip set 610 and slave chip set 612 interact with USB housing interface 614 which could be the same as USB host controller 34 as seen in Figure 1. USB housing interface then drive USB interface 30 and USB interface 60. USB housing interface 614 further is adapted to communicate with an internal USB peripheral 616 if required.

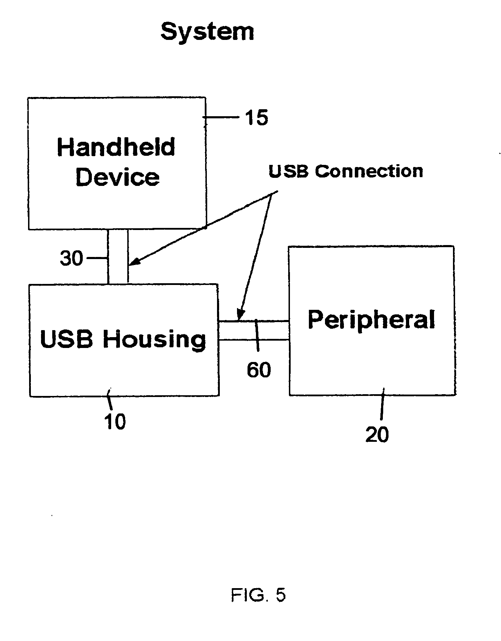

As will be appreciated by those skilled in the art, the universal peripheral connector 10 needs to be positioned between the handheld device and the peripheral. This can be accomplished in several ways. As seen in Figure 5, USB housing, which is the universal peripheral connector 10, is connected to peripheral 20 through a USB connection 60 and a handheld device 15 is connected through a USB port 30.

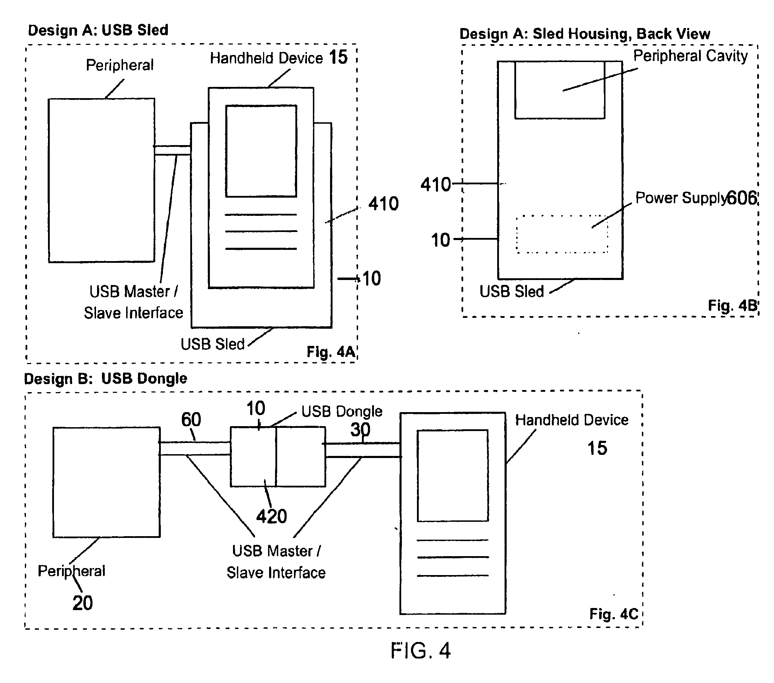

Reference is now made to Figure 4. UPC 10 can have several configurations. As seen in Figure 4A, UPC 10 can be a sled 410. In this case, handheld device 15 is inserted into the sled and a connector within sled 410 is adapted to connect to the USB port of handheld device 15.

Various ports within USB sled 410 can be used to connect to peripherals through a standard USB cable. Alternatively, as seen in Figure 4B, the peripheral can fit into a cavity 415 specially adapted for that peripheral.

As with the device in Figure 6, a power supply 606 is provided to the sled 410. This can be either an external power supply or an internal supply such as batteries.

In a further alternative configuration as seen in Figure 4C, a UPC 10 can be a dongle 420. Dongle 420 is adapted to connect to handheld device 15 and peripheral 20 through USB cables using ports 30 and 60 as described above. The power supply in this case could be an external power supply or batteries within the dongle 420.

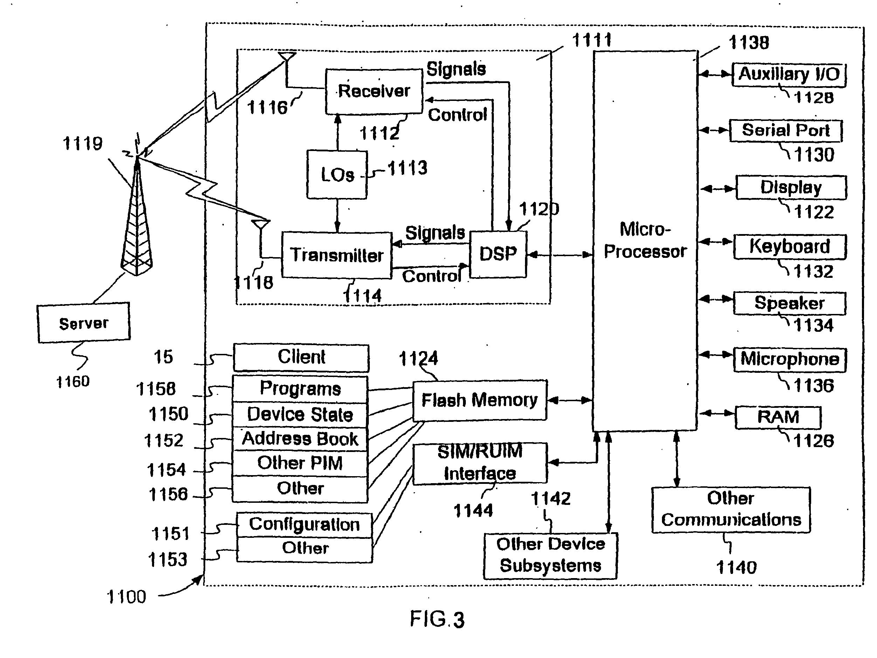

As will be appreciated by those in the art, handheld device 10 can consist of various handheld devices, including telephones, personal digital assistants, pagers, or other mobile data devices. The above is not meant to be limited to any specific mobile device. Referring to Figure 3, an exemplary mobile device that can be used in accordance with the present apparatus and method is described.

Figure 3 is a block diagram illustrating a host mobile station including preferred embodiments of the techniques of the present application. Mobile station 1100 is preferably a two-way wireless communication device having at least voice and data communication capabilities. Mobile station 1100 preferably has the capability to communicate with other computer systems on the Internet. Depending on the exact functionality provided, the wireless device may be referred to as a data messaging device, a two-way pager, a wireless e-mail device, a cellular telephone with data messaging capabilities, a wireless Internet appliance, or a data communication device, as examples.

Where mobile device 1100 is enabled for two-way communication, it will incorporate a communication subsystem 1111, including both a receiver 1112 and a transmitter 1114, as well as associated components such as one or more, preferably embedded or internal, antenna elements 1116 and 1118, local oscillators (LOs) 1113, and a processing module such as a digital signal processor (DSP) 1120. As will be apparent to those skilled in the field of communications, the particular design of the communication subsystem 1111 will be dependent upon the communication network in which the device is intended to operate. For example, mobile station 1100 may include a communication subsystem 1111 designed to operate within the Mobitex^{™} mobile communication system, the DataTAC^{™} mobile communication system, GPRS network, UMTS network, EDGE network or CDMA network.

Network access requirements will also vary depending upon the type of network 1119. For example, in the Mobitex and DataTAC networks, mobile station 1100 is registered on the network using a unique identification number associated with each mobile station. In UMTS and GPRS networks, and in some CDMA networks, however, network access is associated with a subscriber or user of mobile station 1100. A GPRS mobile station therefore requires a subscriber identity module (SIM) card in order to operate on a GPRS network, and a RUIM in order to operate on some CDMA networks. Without a valid SIM/RUIM card, a GPRS/UMTS/CDMA mobile station may not be fully functional. Local or non-network communication functions, as well as legally required functions (if any) such as emergency calling, may be available, but mobile station 1100 will be unable to carry out any other functions involving communications over the network 1100. The SIM/RUIM interface 1144 is normally similar to a card-slot into which a SIM/RUIM card can be inserted and ejected like a diskette or PCMCIA card. The SIM/RUIM card can have approximately 64K of memory and hold many key configuration 1151, and other information 1153 such as identification, and subscriber related information.

When required network registration or activation procedures have been completed, mobile station 1100 may send and receive communication signals over the network 1119. Signals received by antenna 1116 through communication network 1119 are input to receiver 1112, which may perform such common receiver functions as signal amplification, frequency down conversion, filtering, channel selection and the like, and in the example system shown in Figure 3, analog to digital (A/D) conversion. A/D conversion of a received signal allows more complex communication functions such as demodulation and decoding to be performed in the DSP 1120. In a similar manner, signals to be transmitted are processed, including modulation and encoding for example, by DSP 1120 and input to transmitter 1114 for digital to analog conversion, frequency up conversion, filtering, amplification and transmission over the communication network 1119 via antenna 1118. DSP 1120 not only processes communication signals, but also provides for receiver and transmitter control. For example, the gains applied to communication signals in receiver 1112 and transmitter 1114 may be adaptively controlled through automatic gain control algorithms implemented in DSP 1120.

Network 1119 may further communicate with multiple systems, including a server 1160 and other elements (not shown). For example, network 1119 may communicate with both an enterprise system and a web client system in order to accommodate various clients with various service levels.

Mobile station 1100 preferably includes a microprocessor 1138 which controls the overall operation of the device. Communication functions, including at least data and voice communications, are performed through communication subsystem 1111. Microprocessor 1138 also interacts with further device subsystems such as the display 1122, flash memory 1124, random access memory (RAM) 1126, auxiliary input/output (I/O) subsystems 1128, serial port 1130, keyboard 1132, speaker 1134, microphone 1136, a short-range communications subsystem 1140 and any other device subsystems generally designated as 1142.

Some of the subsystems shown in Figure 3 perform communication-related functions, whereas other subsystems may provide "resident" or on-device functions. Notably, some subsystems, such as keyboard 1132 and display 1122, for example, may be used for both communication-related functions, such as entering a text message for transmission over a communication network, and device-resident functions such as a calculator or task list.

Operating system software used by the microprocessor 1138 is preferably stored in a persistent store such as flash memory 1124, which may instead be a read-only memory (ROM) or similar storage element (not shown). Those skilled in the art will appreciate that the operating system, specific device applications, or parts thereof, may be temporarily loaded into a volatile memory such as RAM 1126. Received communication signals may also be stored in RAM 1126. Further, a unique identifier is also preferably stored in read-only memory.

As shown, flash memory 1124 can be segregated into different areas for both computer programs 1158 and program data storage 1150, 1152, 1154 and 1156. These different storage types indicate that each program can allocate a portion of flash memory 1124 for their own data storage requirements. Microprocessor 1138, in addition to its operating system functions, preferably enables execution of software applications on the mobile station. A predetermined set of applications that control basic operations, including at least data and voice communication applications for example, will normally be installed on mobile station 1100 during manufacturing. A preferred software application may be a personal information manager (PIM) application having the ability to organize and manage data items relating to the user of the mobile station such as, but not limited to, e-mail, calendar events, voice mails, appointments, and task items. Naturally, one or more memory stores would be available on the mobile station to facilitate storage of PIM data items. Such PIM application would preferably have the ability to send and receive data items, via the wireless network 1119. In a preferred embodiment, the PIM data items are seamlessly integrated, synchronized and updated, via the wireless network 1119, with the mobile station user's corresponding data items stored or associated with a host computer system. Further applications may also be loaded onto the mobile station 1100 through the network 1119, an auxiliary I/O subsystem 1128, serial port 1130, short-range communications subsystem 1140 or any other suitable subsystem 1142, and installed by a user in the RAM 1126 or preferably a nonvolatile store (not shown) for execution by the microprocessor 1138. Such flexibility in application installation increases the functionality of the device and may provide enhanced on-device functions, communication-related functions, or both. For example, secure communication applications may enable electronic commerce functions and other such financial transactions to be performed using the mobile station 1100. These applications will however, according to the above, in many cases need to be approved by a carrier.

In a data communication mode, a received signal such as a text message or web page download will be processed by the communication subsystem 1111 and input to the microprocessor 1138, which preferably further processes the received signal for output to the display 1122, or alternatively to an auxiliary I/O device 1128. A user of mobile station 1100 may also compose data items such as email messages for example, using the keyboard 1132, which is preferably a complete alphanumeric keyboard or telephone-type keypad, in conjunction with the display 1122 and possibly an auxiliary I/O device 1128. Such composed items may then be transmitted over a communication network through the communication subsystem 1111.

For voice communications, overall operation of mobile station 1100 is similar, except that received signals would preferably be output to a speaker 1134 and signals for transmission would be generated by a microphone 1136. Alternative voice or audio I/O subsystems, such as a voice message recording subsystem, may also be implemented on mobile station 1100. Although voice or audio signal output is preferably accomplished primarily through the speaker 1134, display 1122 may also be used to provide an indication of the identity of a calling party, the duration of a voice call, or other voice call related information for example.

Serial port 1130 in Figure 3 would normally be implemented in a personal digital assistant (PDA)-type mobile station for which synchronization with a user's desktop computer (not shown) may be desirable. Such a port 1130 would enable a user to set preferences through an external device or software application and would extend the capabilities of mobile station 1100 by providing for information or software downloads to mobile station 1100 other than through a wireless communication network. The alternate download path may for example be used to load an encryption key onto the device through a direct and thus reliable and trusted connection to thereby enable secure device communication.

Other communications subsystems 1140, such as a short-range communications subsystem, is a further optional component which may provide for communication between mobile station 1100 and different systems or devices, which need not necessarily be similar devices. For example, the subsystem 1140 may include an infrared device and associated circuits and components or a Bluetooth^{™} communication module to provide for communication with similarly enabled systems and devices.

## Claims

1. A universal connector apparatus for a mobile device, the apparatus comprising:
at least one universal serial bus (USB) connector providing at least one connection;
at least one USB host controller configured to control the at least one USB connection;
a microprocessor configured to control said at least one USB host controller, the microprocessor having an operating system; and
a USB driver configured to operate within said operating system to enable a mobile device to connect to one or more peripherals via said at least one USB connection;
internal memory adapted to store one or more USB peripheral drivers for connecting a mobile device to said one or more peripherals,
wherein said peripheral drivers are loaded onto said connector apparatus from a remote repository via a mobile device connected to the apparatus.

2. The apparatus of claim 1, wherein said USB host controller comprises a USB master chipset and a USB slave chipset.

3. The apparatus of any one of claims 1 or 2, further comprising a video graphics array (VGA) connector to connect a mobile device to a VGA peripheral.

4. The apparatus of any one of claims 1 to 3, wherein the universal connector apparatus is a sled adapted to receive a mobile device.

5. The apparatus of any one of claims 1 to 4, wherein the universal connector apparatus is a dongle connected to a mobile device through a USB cable.

6. A universal connector system comprising the universal connector apparatus of any one of claims 1 to 5 and a mobile device connected to said apparatus, the apparatus being in communication with the mobile device, wherein
the mobile device has a USB device control interface configured to communicate and control said universal connector apparatus.

7. The system of claim 6 further comprising one or more peripherals connected to said apparatus, wherein said one or more peripherals comprises one or more printers, one or more facsimile machines, one or more computers, one or more digital cameras, one or more portable memory devices, one or more portable music players, one or more scanners, one or more barcode scanners, one or more monitors, one or more projectors, one or more keyboards, and/or one or more media writers.

8. The system of claim 6 or claim 7, wherein it further comprises a remote repository for drivers, said mobile device having means to communicate with said remote repository over an air interface to obtain a driver.

9. A method of connecting and facilitating control of a universal serial bus (USB) peripheral from a mobile device using a universal connector apparatus, the method comprising the steps of:
detecting at the connector apparatus the connection or presence of a USB peripheral;
if the peripheral is the mobile device configuring the mobile device for remote control of the universal connector; and
if the peripheral device is not the mobile device,
configuring the mobile device if connected for remote control of the universal connector;
locating a driver for said peripheral, said locating step comprising
requesting the driver from the mobile device, wherein the mobile device requests the driver from a drivers' repository over an air interface if the driver is not stored on the mobile device; and
driving said peripheral using said driver to provide a functional feature at the mobile device.

10. The method of claim 9 further comprising the steps of:
connecting a video graphics adapter (VGA) peripheral to a VGA port on the connector apparatus;
locating a driver for the VGA peripheral; and
driving the VGA peripheral from the mobile device.

11. A computer program product for connecting and facilitating control of a universal serial bus (USB) peripheral from a mobile device using a universal connector apparatus, the computer program product comprising a computer readable medium embodying program code means executable by a processor of the universal connector apparatus for implementing the method of any one of claims 9 to 10.

## Patentansprüche

1. Universelle Verbindervorrichtung für ein Mobilgerät, wobei die Vorrichtung umfasst:
mindestens einen USB-Verbinder (Universal Serial Bus), der
mindestens eine Verbindung ermöglicht;
mindestens einen USB-Host-Controller, der zur Steuerung der mindestens einen USB-Verbindung konfiguriert ist;
einen Mikroprozessor, der zur Steuerung des mindestens einen USB-Host-Controllers konfiguriert ist, wobei der Mikroprozessor über ein Betriebssystem verfügt; und
einen USB-Treiber, der zum Betrieb innerhalb des Betriebssystems konfiguriert ist, um ein Mobilgerät zu befähigen, die Verbindung zu einem oder mehreren Peripheriegeräten über die mindestens eine USB-Verbindung herzustellen;
internen Speicher, der zum Speichern von einem oder mehreren USB-Peripheriegerätetreibern angepasst ist, um ein Mobilgerät mit dem einen oder mehreren Peripheriegeräten zu verbinden;
wobei die Peripheriegerätetreiber aus einem entfernten Repository über ein Mobilgerät auf die Verbindervorrichtung geladen werden, das mit der Vorrichtung verbunden ist.

2. Vorrichtung gemäß Anspruch 1, wobei der USB-Host-Controller einen USB-Master-Chipsatz und einen USB-Slave-Chipsatz umfasst.

3. Vorrichtung gemäß einem der Ansprüche 1 oder 2, des Weiteren umfassend einen VGA-Verbinder (Video Graphics Array) zum Verbinden eines Mobilgeräts mit einem VGA-Peripheriegerät.

4. Vorrichtung gemäß einem der Ansprüche 1 bis 3, wobei die universelle Verbindervorrichtung ein Schlitten ist, der zum Aufnehmen eines Mobilgeräts angepasst ist.

5. Vorrichtung gemäß einem der Ansprüche 1 bis 4, wobei die universelle Verbindervorrichtung ein Dongle ist, der über ein USB-Kabel mit einem Mobilgerät verbunden ist.

6. Universelles Verbindersystem, umfassend die universelle Verbindervorrichtung gemäß einem der Ansprüche 1 bis 5 und ein Mobilgerät, das mit der Vorrichtung verbunden ist, so dass die Vorrichtung mit dem Mobilgerät kommuniziert, wobei
das Mobilgerät über eine USB-Gerätesteuerschnittstelle verfügt, die konfiguriert ist, um mit der universellen Verbindervorrichtung zu kommunizieren und diese zu steuern.

7. System gemäß Anspruch 6, des Weiteren umfassend ein oder mehrere Peripheriegeräte, die mit der Vorrichtung verbunden sind, wobei dieses eine oder mehrere Peripheriegeräte einen oder mehrere Drucker, einen oder mehrere Faxgeräte, einen oder mehrere Computer, eine oder mehrere Digital-kameras, ein oder mehrere tragbare Speichergeräte, ein oder mehrere tragbare Musikabspielgeräte, einen oder mehrere Scanner, einen oder mehrere Strichcode-Scanner, einen oder mehrere Monitore, einen oder mehrere Projektoren, eine oder mehrere Tastaturen und/oder ein oder mehrere Medienschreibgeräte umfassen.

8. System gemäß Anspruch 6 oder Anspruch 7, wobei dieses des Weiteren ein entferntes Repository für Treiber umfasst und wobei das Mobilgerät über Mittel zum Kommunizieren mit diesem entfernten Repository über eine Luftschnittstelle verfügt, um einen Treiber zu erhalten.

9. Verfahren zum Verbinden und zum Ermöglichen der Steuerung eines USB-Peripheriegeräts (Universal Serial Bus) von einem Mobilgerät unter Verwendung einer universellen Verbindervorrichtung, wobei das Verfahren die folgenden Schritte umfasst:
das Erkennen an der Verbindervorrichtung die Verbindung bzw. das Vorhandensein eines USB-Peripheriegeräts;
wenn es sich bei dem Peripheriegerät um das Mobilgerät handelt, das Konfigurieren des Mobilgeräts zur Fernsteuerung des universellen Verbinders; und
wenn es sich bei dem Peripheriegerät nicht um das Mobilgerät handelt, das Konfigurieren des Mobilgeräts, wenn es verbunden ist, zur Fernsteuerung des universellen Verbinders;
das Auffinden eines Treibers für das Peripheriegerät, wobei der Schritt des Auffindens umfasst
das Anfordern des Treibers von dem Mobilgerät, wobei das Mobilgerät den Treiber über eine Luftschnittstelle von einem Treiber-Repository anfordert, falls der Treiber nicht bereits auf dem Mobilgerät gespeichert ist; und
das Ansteuern des Peripheriegeräts unter Verwendung des Treibers, um ein Funktionsmerkmal an dem Mobilgerät bereitzustellen.

10. Verfahren entsprechend Anspruch 9, des Weiteren umfassend die folgenden Schritte:
das Verbinden eines VGA-Peripheriegeräts (Video Graphics Adapter) mit einem VGA-Anschluss an der Verbindervorrichtung;
das Auffinden eines Treibers für das VGA-Peripheriegerät; und
das Ansteuern des VGA-Peripheriegeräts von dem Mobilgerät aus.

11. Computerprogrammprodukt zum Verbinden und zur Unterstützung der Steuerung eines USB-Peripheriegeräts (Universal Serial Bus) von einem Mobilgerät unter Verwendung einer universellen Verbindervorrichtung, wobei das Computerprogrammprodukt ein computerlesbares Medium mit darauf verkörperten Programmcodemitteln umfasst, die von einem Prozessor der universellen Verbindervorrichtung ausgeführt werden können, um das Verfahren gemäß einem der Ansprüche 9 bis 10 zu implementieren.

## Revendications

1. Un connecteur universel destiné à un dispositif mobile, l'appareil comprenant :
au moins un connecteur USB (bus série universel) fournissant au moins une connexion,
au moins une unité de commande hôte USB configurée de façon à commander la au moins une connexion USB,
un microprocesseur configuré de façon à commander ladite au moins une unité de commande hôte USB, le microprocesseur possédant un système d'exploitation, et
un pilote USB configuré de façon à fonctionner à l'intérieur dudit système d'exploitation afin de permettre à un dispositif mobile de se connecter à un ou plusieurs périphériques via ladite au moins une connexion USB,
une mémoire interne adaptée de façon à conserver en mémoire un ou plusieurs pilotes de périphériques USB destinés à connecter un dispositif mobile auxdits un ou plusieurs périphériques,
où lesdits pilotes de périphériques sont chargés sur ledit connecteur à partir d'un système d'archivage distant via un dispositif mobile connecté à l'appareil.

2. L'appareil selon la Revendication 1 où ladite unité de commande hôte USB comprend un chipset maître USB et un chipset esclave USB.

3. L'appareil selon l'une quelconque des Revendications 1 ou 2, comprenant en outre un connecteur VGA (matrice graphique vidéo) destiné à connecter un dispositif mobile à un périphérique VGA.

4. L'appareil selon l'une quelconque des Revendications 1 à 3, où le connecteur universel est un socle adapté de façon à recevoir un dispositif mobile.

5. L'appareil selon l'une quelconque des Revendications 1 à 4, où le connecteur universel est un dongle connecté à un dispositif mobile par l'intermédiaire d'un câble USB.

6. Un système de connecteur universel comprenant le connecteur universel selon l'une quelconque des Revendications 1 à 5 et un dispositif mobile connecté audit appareil, l'appareil étant en communication avec le dispositif mobile, où
le dispositif mobile est doté d'une interface de commande de dispositif USB configurée de façon à communiquer avec et à commander ledit connecteur universel.

7. Le système selon la Revendication 6 comprenant en outre un ou plusieurs périphériques connectés audit appareil, où lesdits un ou plusieurs périphériques comprennent une ou plusieurs imprimantes, un ou plusieurs télécopieurs, un ou plusieurs ordinateurs, un ou plusieurs appareils photo numériques, un ou plusieurs dispositifs à mémoire portatifs, un ou plusieurs lecteurs de musique portatifs, un ou plusieurs scanners, un ou plusieurs lecteurs de codes à barres, un ou plusieurs moniteurs, un ou plusieurs projecteurs, un ou plusieurs claviers, et/ou un ou plusieurs graveurs de supports.

8. Le système selon la Revendication 6 ou 7, comprenant en outre un système d'archivage distant destiné aux pilotes, ledit dispositif mobile possédant un moyen de communiquer avec ledit système d'archivage distant par l'intermédiaire d'une interface hertzienne afin d'obtenir un pilote.

9. Un procédé destiné à connecter et à faciliter la commande d'un périphérique USB (bus série universel) à partir d'un dispositif mobile au moyen d'un connecteur universel, le procédé comprenant les opérations suivantes :
la détection sur le connecteur de la connexion ou de la présence d'un périphérique USB,
si le périphérique est le dispositif mobile, la configuration du dispositif mobile afin de commander à distance le connecteur universel, et
si le dispositif périphérique n'est pas le dispositif mobile,
la configuration du dispositif mobile s'il est connecté afin de commander à distance le connecteur universel,
le repérage d'un pilote pour ledit périphérique, ladite opération de repérage comprenant
la demande du pilote auprès du dispositif mobile, où le dispositif mobile demande le pilote auprès d'un système d'archivage de pilotes par l'intermédiaire d'une interface hertzienne si le pilote n'est pas conservé en mémoire sur le dispositif mobile, et
le pilotage dudit périphérique au moyen dudit pilote de façon à fournir une caractéristique fonctionnelle sur le dispositif mobile.

10. Le procédé selon la Revendication 9 comprenant en outre les opérations suivantes :
la connexion d'un périphérique VGA (matrice graphique vidéo) sur un port VGA du connecteur,
le repérage d'un pilote pour le périphérique VGA, et
le pilotage du périphérique VGA à partir du dispositif mobile.

11. Un programme informatique destiné à connecter et à faciliter la commande d'un périphérique USB (bus série universel) à partir d'un dispositif mobile au moyen d'un connecteur universel, le programme informatique comprenant un support lisible par ordinateur incorporant du code de programme exécutable par un processeur du connecteur universel afin de mettre en oeuvre le procédé selon l'une quelconque des Revendications 9 à 10.
